# EUROPÄISCHE PATENTSCHRIFT

(11) **EP 0 841 146 B1**
(45) Veröffentlichungstag und Bekanntmachung des Hinweises auf die Patenterteilung: **27.02.2002**
(21) Anmeldenummer: 96117459.6
(22) Anmeldetag: 31.10.1996
(51) Int. Cl.: B29C 59/16, H01M 2/04

(54) **Leitfähige Bereiche auf isolierenden Kunststoffen**
Conductive regions on insulating plastics materials
Zones conductives sur des matières plastiques isolantes

(43) Veröffentlichungstag der Anmeldung: 13.05.1998
(73) Patentinhaber: Accumulatorenwerke Hoppecke Carl Zoellner & Sohn GmbH & Co. KG, 59914 Brilon (DE)
(72) Erfinder: Pospiech, Gerhard, Dr., 59929 Brilon (DE); Sassmannshausen, Günter, Dr., 59929 Brilon (DE)
(74) Vertreter: Stenger, Watzke & Ring Patentanwälte

(56) Entgegenhaltungen:
- EP-A- 0 178 422
- EP-A- 0 346 485
- GB-A- 2 071 673
- US-A- 4 491 605
- US-A- 5 266 244
- US-A- 5 320 789
- PATENT ABSTRACTS OF JAPAN vol. 014, no. 227 (C-0718), 15.Mai 1990 & JP 02 055738 A (VICTOR CO OF JAPAN LTD), 26.Februar 1990,
- IBM TECHNICAL DISCLOSURE BULLETIN, Bd. 33, Nr. 8, 1.Januar 1991, Seite 379/380 XP000109227 "SURFACE CARBONIZATION BY MICROWAVE TREATMENT"
- OPTOELECTRONICS DEVICES AND TECHNOLOGIES, Bd. 8, Nr. 2, 1.Juni 1993, Seiten 179-190, XP000383878 TSUNEO NAKATA ET AL: "ULTRAVIOLET AND VACUUM-ULTRAVIOLET LASER ABLATION OF ORGANIC POLYMERS"
- IN SEARCH OF EXCELLENCE, MONTREAL, MAY 5 - 9, 1991, Bd. 2 OF 5, 5.Mai 1991, SOCIETY OF PLASTICS ENGINEERS, Seiten 783-787, XP000357165 DAO L H: "SURFACE MODIFICATION OF POLYIMIDE FILMS BY LASER PROCESSING AND ELECTRICALLY CONDUCTING POLYMERS"
- KOBUNSHI RONBUNSHU (JAPANESE POLYMER SCIENCE AND TECHNOLOGY), Bd. 51, Nr. 5, 1.Januar 1994, Seiten 361-363, XP000449090 TSUBAKIHARA H ET AL: "SURFACE CONDUCTIVITY OF POLYMIDE FILMS MODIFIED BY KRF EXCIMER LASER IRRADIATION"

## Beschreibung

Die Erfindung betrifft ein Kunststoffgehäuse, einen Akkumulator umschließend, welches wenigstens teilweise aus isolierenden Kunststoffen gebildet ist, auf welchen durch Zuführung thermischer Energie leitfähige Bereiche ausgebildet sind.

Isolierende Kunststoffe haben üblicherweise spezifische Oberflächenwiderstände > 10¹⁰ Ω x cm (Ohm mal Zentimeter), üblicherweise in Größenordnungen von 10¹² bis 10¹⁷ Ω x cm. Bei der Berührung mit anderen Stoffen oder durch Anlagern von elektrisch geladenen Teilchen entwickeln derartige isolierende Kunststoffe elektrostatische Aufladungen beträchtlicher Energie. Diese elektrostatischen Aufladungen führen auf Flächen unter anderem zur Anziehung von Staub und damit zu schnellem Verschmutzen. Durch die Ladungen können sich darüber hinaus Funkenstrecken ausbilden und somit zündfähige Gemische wie Staub/Luft, Dämpfe/Luft, Gas/Luft und dergleichen zur Explosion bringen.

Bekannte Maßnahmen zur Beeinflussung der elektrostatischen Aufladung bestehen in der Einrichtung einer leitfähigen Umgebung bzw. Erzeugung einer leitfähigen Oberfläche an den Kunststoffflächen. Dazu gehören Umsetzungsmaßnahmen wie Luftionisation durch Strahlung oder Sprühelektroden, Leitungsabladung und Betriebsbedingungen in Form von hoher relativer Luftfeuchte, beispielsweise > 65 %.

Als eine der effektivsten Maßnahmen gilt die Absenkung der Oberflächenwiderstandes, was durch sogenannte Antistatika - chemische Verbindungen mit freien Elektronenpaaren - erfolgt. Die Absenkungen gehen in einen Bereich ≤ 10¹⁰ Ω x cm, jedoch nicht sehr tief. Die Verbindungen können auf Kunststoffflächen aufgesprüht oder den Kunststoffen vor der Formgebung zugemischt werden. Mit der Luftfeuchtigkeit werden dünne, leitfähige Wasserfilme gebildet, deren Wirksamkeit jedoch mit zunehmender Zeit nachläßt, beispielsweise nach ca. 6 Monaten. Auch die oxydierende Behandlung von Kunststoffoberflächen kann zur Wasserfilmausbildung führen.

Schließlich können auf die unbehandelten Kunststoffe permanent leitfähige Schichten wie Lacke, Folien und dergleichen aufgebracht werden, um den üblicherweise zwischen 10¹² und 10¹⁷ Ω x cm liegenden spezifischen Widerstand zu beeinflussen.

Bekannt ist darüber hinaus der Einsatz von Rußen, die je nach spezifischer Oberfläche (cm²/gr) in Konzentrationen von 5 % bis 20 % den Kunststoffen beigemischt werden. Der Durchgangswiderstand sinkt dabei konform mit dem Oberflächenwiderstand auf Werte ≤ 10⁸ Ω x cm. Die Veränderung läuft bei kleinen Konzentrationsänderungen von Ruß im Kunststoff über mehrere Zehnerpotenzen des Widerstands, so daß eine exakte Einstellung des Widerstands auf einen gewünschten Wert praktisch unmöglich ist.

Insbesondere in dem Anwendungsfall auf die Kunststoffgehäuse von Akkumulatoren, üblicherweise Bleiakkumulatoren, bei denen durch die Einbettung von positiven und negativen Polen im Kunststoff eine Spannung anliegt, ist die exakte, wiederholbare Einstellung des Widerstandes zur Vermeidung von Knallgaszündungen durch elektrostatische Felder wünschenswert und mittlerweile erforderlich. Bei einer beispielhaften Spannung von 12 V und einem Widerstand von 10⁴ Ω x cm fließt nach dem Ohmschen Gesetz ein Strom im mA-Bereich. Durch diesen Entladestrom bedingt (Selbstentladung der Batterie) muß ein unterster Widerstandswert von 10⁵ Ω x cm eingehalten werden, der aber aufgrund des vorher beschriebenen Widerstandsverhaltens der Rußkonzentration im Kunststoff weder exakt einstellbar ist noch exakt eingehalten werden kann. Man könnte ggf. einen der Akkumulatorenpole gegenüber dem Kunststoff isolieren, jedoch addieren sich hierbei die Kosten für zusätzliche Isolierungen eines Pols mit den Kosten für die relativ hohe Rußbeimischung, die zusätzlich zu einer undefinierten Veränderung der Kunststoffeigenschaften führt, so daß andere Erfordernisse nicht mehr garantiert werden können.

Ausgehend von diesem Stand der Technik liegt der vorliegenden Erfindung die **Aufgabe** zugrunde, einen Akkumulator bereitzustellen, der ein verringertes Verschmutzungsverhalten und in erster Linie ein erheblich reduziertes Explosionsverhalten infolge von Knallgaszündungen durch Oberflächenladungen aufweist.

Zur technischen **Lösung** dieser Aufgabe wird mit der Erfindung vorgeschlagen, daß die leitfähigen Bereiche mit wenigstens einem Pol des Akkumulators verbunden sind.

Der isolierende Kunststoff, aus dem Akkumulatorengehäuse hergestellt werden, ist an sich bekannt, die Erfindung ist begünstigt bei isolierenden Kunststoffen mit Rußbeimischung. In vorteilhafter Weise sind die leitfähigen Bereiche im Deckel des Akkumulators ausgebildet, in besonders vorteilhafter Weise in Strukturen. Diese Strukturen sind vorzugsweise Gitterstrukturen, die mit einem der Pole verbunden sind, wobei mit jedem der Pole eine separate und gegen die jeweils andere isolierte Gitterstruktur verbunden ist.

In überraschender Weise hat sich herausgestellt, daß insbesondere bei Kunststoffen mit Rußbeimischungen und spezifischen Widerständen von > 10¹⁰ Ω x cm beim Einleiten von thermischer Energie in die Oberfläche im Bereich der Energieeinleitung der Widerstand auf Werte < 10⁸ Ω x cm absinkt. Dabei wird für die Energieeinleitung nur ein Wert < 2 J/cm² benötigt.

Die Energiezuführung erfolgt vorteilhafter Weise kurzzeitig und auf das Kunststoffelement im ausgehärteten Zustand. Gemäß einem besonders vorteilhaften Vorschlag der Erfindung erfolgt die Energieeinleitung durch einen Laserstrahl. Durch diese Maßnahme ist es in einfacher Weise möglich, die Dimensionen der widerstandsreduzierten Bereiche festzulegen, also beispielsweise Tiefe, Breite und Länge von widerstandsreduzierten Bahnen.

Alternativ können andere Energiezuführungsverfahren angewandt werden, beispielsweise Gasflammen, Strahlung, Endladung und dergleichen.

In das erfindungsgemäße Kunststoffgehäuse lassen sich Strukturen ausbilden, die einlagigen Leiterplatten ähnlich sein können. In besonders vorteilhafter Weise lassen sich Gitterstrukturen ausbilden, wobei auch mehrere voneinander getrennte Ebenen leitfähiger Bahnen angelegt werden können.

Die Erfindung stellt ein wirtschaftlich und äußerst effektiv herzustellendes Kunststoffgehäuse mit leitfähigen Bereichen bereit.

In dem besonderen Anwendungsfall einer Batterieoberfläche müssen zur Ableitung von Ladungen Bahnen zu wenigstens einem der Pole geführt werden. In vorteilhafter Weise lassen sich zwei getrennte Bahnstrukturen mit je einem der Pole verbinden, wobei die Bahnstrukturen auch in unterschiedlichen Ebenen einander überdeckend ausgebildet werden können. In besonders vorteilhafter Weise handelt es sich um Gitterstrukturen.

Mit der Erfindung wird ein Akkumulator bereitgestellt, dessen Explosions- und Verschmutzungsverhalten durch geringe wirtschaftliche Maßnahmen erheblich verbessert sind.

Weitere Vorteile und Merkmale der Erfindung ergeben sich aus der folgenden Beschreibung anhand der Figuren. Dabei zeigt:

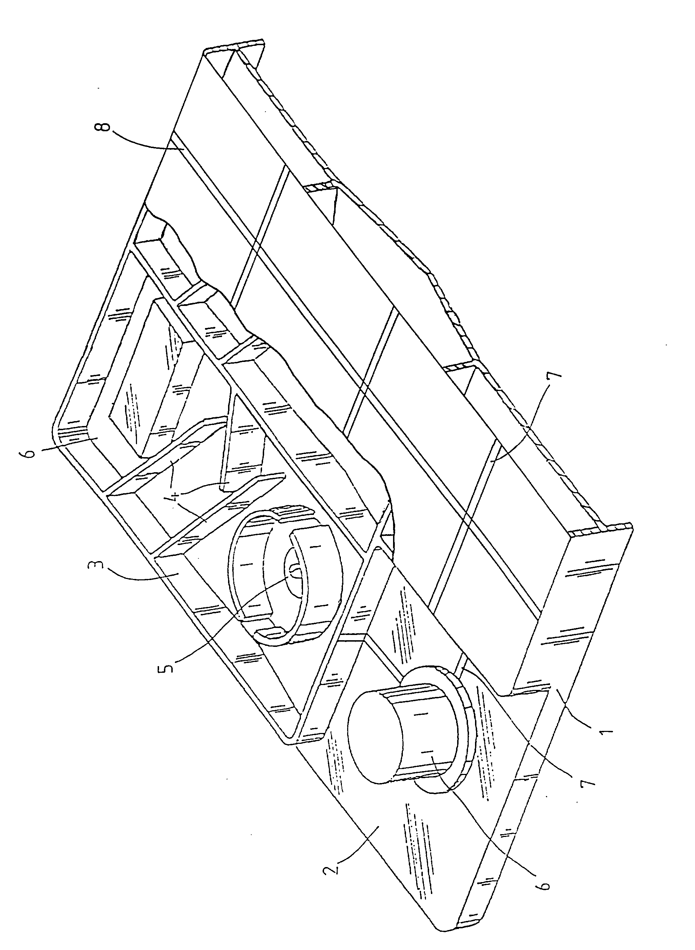

- Figur 1: eine schematische Darstellung eines Teilbereiches eines Akkumulatorengehäuses.

In Figur 1 ist schematisch ein Deckel 1 eines Bleiakkumulators gezeigt, der in an sich bekannter Weise aus einem sogenannten Unterdeckel 2 besteht, auf dem Stege 3 zellenbezogene Kammern bilden. Weitere Stege 4 dienen zur Ausbildung eines Rückhaltelabyrinths für Batteriesäure. Durch weitere Stege sind die Zugangsöffnungen 5 zu den jeweiligen Zellen eingefaßt. Die Ausbildung der Akkumulatorengehäuses bzw. des Deckels des Akkumulatorengehäuses ist jedoch für die vorliegende Erfindung von untergeordneter Bedeutung.

In an sich bekannter Weise durchragt ein Batteriepol 6 den Deckel. An einer anderen Stelle durchragt ein nicht gezeigter weiterer Batteriepol den Deckel. Durch die Einbettung des positiven und negativen Pols in den Kunststoff liegt somit in dem isolierenden Kunststoff des Deckels 2 eine Spannung an.

Zur Leitung, Kontrolle und Ableitung der Oberflächenspannungen ist in dem Deckel eine Gitterstruktur ausgebildet, die durch horizontale Bahnen 7 und vertikale Bahnen 8 gebildet sind. Die Bahnen 7 und 8 sind leitfähige Bereiche, die beispielsweise durch die Einwirkung eines Laserstrahls in den Kunststoff ausgebildet wurden.

### Bezugszeichenliste:

- 1: Deckel
- 2: Unterdeckel
- 3: Steg
- 4: Steg
- 5: Zellenöffnung
- 6: Pol
- 7: leitfähige Bahn
- 8: leitfähige Bahn

## Patentansprüche

1. Kunststoffgehäuse, einen Akkumulator umschließend, welches wenigstens teilweise aus isolierenden Kunststoffen gebildet ist, auf welchen durch Zuführung thermischer Energie leitfähige Bereiche ausgebildet sind,
**dadurch gekennzeichnet,**
**daß** die leitfähigen Bereiche mit wenigstens einem Pol (6) des Akkumulators verbunden sind.

2. Kunststoffgehäuse nach Anspruch 1, **dadurch gekennzeichnet, daß** dieser die leitfähigen Bereiche im Deckel (1) aufweist.

3. Kunststoffgehäuse nach Anspruch 1 oder Anspruch 2, **dadurch gekennzeichnet, daß** die leitfähigen Bereiche strukturiert sind.

4. Kunststoffgehäuse nach Anspruch 3, **dadurch gekennzeichnet, daß** die leitfähigen Bereiche in einer Gitterstruktur (7, 8) ausgebildet sind.

5. Kunststoffgehäuse nach einem der Ansprüche 1 bis 4, **dadurch gekennzeichnet, daß** mit jedem der Pole (6) des Akkumulators eine gegenüber anderen isolierte Gitterstruktur leitfähiger Bereiche verbunden ist.

6. Kunststoffgehäuse nach Anspruch 4 oder 5, **dadurch gekennzeichnet, daß** die Gitterstruktur durch horizontale Bahnen und vertikale Bahnen gebildet wird.

7. Kunststoffgehäuse nach einem der Ansprüche 1 bis 6, **dadurch gekennzeichnet, daß** das Kunststoffgehäuse aus isolierenden Kunststoffen mit Rußbeimischungen gebildet ist, auf welchen durch Zuführung thermischer Energie leitfähige Bereich ausgebildet sind.

8. Kunststoffgehäuse nach einem der vorhergehenden Ansprüche, **dadurch gekennzeichnet, daß** die Zuführung thermischer Energie kurzzeitig erfolgt ist.

9. Kunststoffgehäuse nach einem der vorhergehenden Ansprüche, **dadurch gekennzeichnet, daß** die Zuführung thermischer Energie auf den Kunststoff in ausgehärtetem Zustand erfolgt ist.

10. Kunststoffgehäuse nach einem der vorhergehenden Ansprüche, **dadurch gekennzeichnet, daß** die Zuführung der thermischen Energie mittels Laserstrahlen erfolgt ist.

## Claims

1. Plastic housing, enclosing a storage battery, which housing is formed at least partially from insulating plastics on which conductive regions are formed by supplying thermal energy, **characterized in that** the conductive regions are connected to at least one terminal (6) of the storage battery.

2. Plastic housing according to Claim 1, **characterized in that** it has the conductive regions in the cover (1).

3. Plastic housing according to Claim 1 or Claim 2, **characterized in that** the conductive regions are structured.

4. Plastic housing according to Claim 3, **characterized in that** the conductive regions are formed in a grid structure (7, 8).

5. Plastic housing according to one of Claims 1 to 4, **characterized in that** connected to each of the terminals (6) of the storage battery is a grid structure of conductive regions insulated with respect to others.

6. Plastic housing according to Claim 4 or 5, **characterized in that** the grid structure is formed by horizontal traces and vertical traces.

7. Plastic housing according to one of Claims 1 to 6, **characterized in that** the plastic housing is formed from insulating plastics with additions of carbon black, on which conductive regions are formed by supplying thermal energy.

8. Plastic housing according to one of the preceding claims, **characterized in that** the supply of thermal energy is performed for a short time.

9. Plastic housing according to one of the preceding claims, **characterized in that** the supply of thermal energy to the plastic is performed in the cured state.

10. Plastic housing according to one of the preceding claims, **characterized in that** the supply of thermal energy is performed by means of laser beams.

## Revendications

1. Boîtier en matière plastique, qui enferme un accumulateur et qui est formé au moins partiellement en matière plastique isolante sur lesquelles sont réalisées des zones conductrices par apport d'énergie thermique,
**caractérisé en ce que** les zones conductrices sont reliées à au moins un pôle (6) de l'accumulateur.

2. Boîtier en matière plastique selon la revendication 1, **caractérisé en ce que** celui-ci comporte les zones conductrices dans le couvercle (1).

3. Boîtier en matière plastique selon l'une ou l'autre des revendications 1 et 2, **caractérisé en ce que** les zones conductrices sont structurées.

4. Boîtier en matière plastique selon la revendication 3, **caractérisé en ce que** les zones conductrices sont réalisées dans une structure grillagée (7, 8).

5. Boîtier en matière plastique selon l'une des revendications 1 à 4, **caractérisé en ce qu'**à chacun des pôles (6) de l'accumulateur est reliée une structure grillagée, isolée par rapport aux autres, appartenant à des zones conductrices.

6. Boîtier en matière plastique selon l'une ou l'autre des revendications 4 et 5, **caractérisé en ce que** la structure grillagée est formée par des pistes horizontales et par des pistes verticales.

7. Boîtier en matière plastique selon l'une des revendications 1 à 6, **caractérisé en ce que** le boîtier en matière plastique est réalisé en matières plastiques isolantes avec addition de noir de carbone, dans lesquelles sont réalisées des zones conductrices par apport d'énergie thermique.

8. Boîtier en matière plastique selon l'une des revendications précédentes, **caractérisé en ce que** l'apport d'énergie thermique a lieu en un temps bref.

9. Boîtier en matière plastique selon l'une des revendications précédentes, **caractérisé en ce que** l'apport d'énergie thermique a lieu sur la matière plastique à l'état durci.

10. Boîtier en matière plastique selon l'une des revendications précédentes, **caractérisé en ce que** l'apport de l'énergie thermique a lieu au moyen de rayonnements laser.
